# EUROPÄISCHE PATENTANMELDUNG

(11) **EP 4 424 128 A1**
(43) Veröffentlichungstag der Anmeldung: **04.09.2024**
(21) Anmeldenummer: 24155297.5
(22) Anmeldetag: 01.02.2024
(51) Int. Cl.: A01B 15/14, A01B 79/00

(54) **TRAGVORRICHTUNG ZUR MONTAGE AN EINEN MASCHINENRAHMEN EINER LANDWIRTSCHAFTLICHEN ARBEITSMASCHINE, LANDWIRTSCHAFTLICHE ARBEITSMASCHINE MIT EINER SOLCHEN TRAGVORRICHTUNG UND VERFAHREN ZUR VERSTELLUNG ZUMINDEST EINER WERKZEUGEINRICHTUNG EINER LANDWIRTSCHAFTLICHEN ARBEITSMASCHINE**

(30) Priorität: 09.02.2023 DE 102023103179
(71) Anmelder: Horsch Maschinen GmbH, 92421 Schwandorf (DE)
(72) Erfinder: Haselhoff, Alexander, 92421 Schwandorf (DE); Egelseer, Bastian, 92421 Schwandorf (DE)
(74) Vertreter: v. Bezold & Partner Patentanwälte - PartG mbB

(57) **Zusammenfassung**

Die Erfindung betrifft eine Tragvorrichtung (10) zur Montage an einen Maschinenrahmen (21) einer landwirtschaftlichen Arbeitsmaschine (20), mit zumindest einer Werkzeugeinrichtung (100), welche zur Bearbeitung eines Bodens (B) und/oder zur Einbringung eines landwirtschaftlichen Guts in einen Boden (B) konfiguriert ist, mit zumindest einer Verstelleinrichtung (200), welche zur Verstellung der zumindest einen Werkzeugeinrichtung (100) konfiguriert ist, wobei die zumindest eine Verstelleinrichtung (200) eine Koppeleinheit (210) umfasst, welche zur Lagerung an dem Maschinenrahmen (21) und zur Betätigung durch zumindest eine Aktuatoreinrichtung (22) konfiguriert ist, und wobei die Verstelleinrichtung (200) eine Stelleinheit (220) umfasst, welche zur Einstellung einer Lage der zumindest einen Werkzeugeinrichtung (100) zu dem Boden (B) konfiguriert ist, wobei die Koppeleinheit (210) und die Stelleinheit (220) miteinander beweglich gekoppelt sind und konfiguriert sind, eine Betätigung der Koppeleinheit (210) umzuwandeln und/oder in Abhängigkeit der umgewandelten Betätigung die zumindest eine Werkzeugeinrichtung (100) definiert zu verstellen. Die Erfindung betrifft ferner eine landwirtschaftliche Arbeitsmaschine (20) mit einer Tragvorrichtung (10) und ein Verfahren zur Verstellung zumindest einer Werkzeugeinrichtung (100) einer landwirtschaftlichen Arbeitsmaschine (20).

## Beschreibung

Die vorliegende Erfindung liegt auf dem Gebiet der Landtechnik und betrifft eine Tragvorrichtung zur Montage an einen Maschinenrahmen einer landwirtschaftlichen Arbeitsmaschine, eine landwirtschaftliche Arbeitsmaschine mit einer solchen Tragvorrichtung und ein Verfahren zur Verstellung zumindest einer Werkzeugeinrichtung einer solchen landwirtschaftlichen Arbeitsmaschine.

Landwirtschaftliche Arbeitsmaschinen zur Bearbeitung eines Bodens und/oder zur Einbringung eines landwirtschaftlichen Guts in einen Boden sind beispielsweise mit Säschareinheiten ausgestattet und werden in der Regel über eine Schwinge oder über eine so genannte Parallelogrammführung an einem Träger einer landwirtschaftlichen Arbeitsmaschine, beispielsweise einer Sämaschine, gelagert. Zur Lagerung der Säschareinheit kommt unter anderem häufig eine so genannte Gummischnur oder eine Blattfeder zum Einsatz.

In der europäischen Patentanmeldung Nr. EP 3 868 191 A1 wird beispielsweise ein Lagerungskonzept mittels einer Schwinge beschrieben. Ein weiteres Lagerungskonzept ist in der deutschen Offenlegungsschrift Nr. DE 10 2009 058 342 A1 angegeben. Aus der internationalen Patentanmeldung Nr. WO 2021/089197 A1 ist eine landwirtschaftliche Arbeitsmaschine mit einer Werkzeugeinheit sowie ein Verfahren zum Steuern oder Regeln eines Auflagedrucks oder einer Arbeitstiefe der Werkzeugeinheit bekannt.

Bei Säschareinheiten, welche jeweils durch eine Schwinge gelagert werden, erfolgt eine Verstellung der Säschareinheit zur Erzielung einer gewünschten Arbeitstiefe durch Verstellung des Trägers der Schwinge, das heißt durch Schwenk- und/oder Höhenverstellung des Trägers. Eine solche Verstellung wird in der Regel mittels eines Hydraulikzylinders realisiert. Sobald die Säschareinheit verstellt werden muss, um eine andere gewünschte Arbeitstiefe zu erzielen, ist es ausreichend, den Hub des Hydraulikzylinders mittels so genannter Alu-Clips zu begrenzen.

Allerdings ist beispielsweise bei Säschareinheiten mit Parallelogrammführung eine Einstellung aufwendiger und erfordert sowohl eine Verstellung des Trägers des jeweiligen Rahmens der Säschareinheit als auch eine Verstellung des jeweiligen oberen Lenkers der Parallelogrammführung.

Ungeachtet der Lagerung mittels Schwinge oder Parallelogrammführung kann neben einer Einstellung zur Erzielung einer gewünschten Arbeitstiefe bei den Säschareinheiten ein so genannter Schardruck eingestellt werden. Der Schardruck ist vorzugsweise die Kraft, mittels welcher die Säschareinheit entlang des Bodens geführt wird. Die Einstellung des Schardrucks erfolgt in der Regel ebenfalls mit einem Hydraulikzylinder, wobei neben einer Einstellung zur Erzielung einer gewünschten Arbeitstiefe auch der Schardruck eingestellt werden muss, nachdem die Arbeitstiefe und der Schardruck zueinander in Beziehung stehen. Eine Einstellung des Schardrucks erfolgt in der Regel ebenfalls jeweils durch eine Schwenk- und/oder Höhenverstellung des Trägers des jeweiligen Rahmens der Säschareinheit.

Insbesondere bei Parallelogrammführungen einer Säschareinheit gestaltet sich allerdings eine Einstellung schwieriger und aufwendiger als eine Einstellung einer Säschareinheit, welche mittels nur einer Schwinge gelagert ist.

Es ist eine Aufgabe der vorliegenden Erfindung, eine Tragvorrichtung zur Montage an einen Maschinenrahmen einer landwirtschaftlichen Arbeitsmaschine bereitzustellen, welche zumindest eine Werkzeugeinrichtung zur Bearbeitung eines Bodens und/oder zur Einbringung eines landwirtschaftlichen Guts in einen Boden umfasst, wobei eine Verstellung der zumindest einen Werkzeugeinrichtung optimiert und vor allem automatisiert ist, um die zumindest eine Werkzeugeinrichtung definiert zu verstellen. Ferner ist es eine Aufgabe der vorliegenden Erfindung, eine landwirtschaftliche Arbeitsmaschine mit einer solchen Tragvorrichtung bereitzustellen. Darüber hinaus ist es eine weitere Aufgabe der vorliegenden Erfindung, ein Verfahren zur Verstellung zumindest einer Werkzeugeinrichtung einer solchen landwirtschaftlichen Arbeitsmaschine bereitzustellen.

Die Aufgabe wird durch die Merkmale der Ansprüche 1, 11 und 14 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt eine Tragvorrichtung zur Montage an einen Maschinenrahmen, vorzugsweise an einen Haupttragrahmen, einer landwirtschaftlichen Arbeitsmaschine, mit zumindest einer Werkzeugeinrichtung, welche, vorzugweise in einem Betriebszustand der landwirtschaftlichen Arbeitsmaschine entlang einer Bewegungsrichtung, zur Bearbeitung eines Bodens und/oder zur Einbringung eines landwirtschaftlichen Guts in einen Boden konfiguriert ist, mit zumindest einer Verstelleinrichtung, welche, vorzugsweise in einem Montagezustand der Tragvorrichtung, zur Verstellung der zumindest einen Werkzeugeinrichtung konfiguriert ist, wobei die zumindest eine Verstelleinrichtung eine Koppeleinheit umfasst, welche zur Lagerung, vorzugsweise schwenkbaren Lagerung, an dem Maschinenrahmen und zur Betätigung durch zumindest eine Aktuatoreinrichtung konfiguriert ist, und wobei die Verstelleinrichtung eine Stelleinheit umfasst, welche zur Einstellung einer Lage der zumindest einen Werkzeugeinrichtung zu dem Boden und/oder zu dem Maschinenrahmen konfiguriert ist, wobei die Koppeleinheit und die Stelleinheit miteinander beweglich gekoppelt sind und konfiguriert sind, vorzugsweise in einem Betriebszustand der landwirtschaftlichen Arbeitsmaschine, eine Betätigung der Koppeleinheit umzuwandeln und/oder um in Abhängigkeit der umgewandelten Betätigung die zumindest eine Werkzeugeinrichtung definiert zu verstellen.

Durch die vorliegende Erfindung kann eine Tragvorrichtung und im Weiteren eine landwirtschaftliche Arbeitsmaschine mit einer solchen Tragvorrichtung bereitgestellt werden, bei welcher vor allem eine Einstellung der Arbeitstiefe der zumindest einen Werkzeugeinrichtung wesentlich vereinfacht und insbesondere eine Anzahl der für eine Einstellung der zumindest einen Werkzeugeinrichtung erforderlichen Schritte oder Maßnahmen wesentlich verringert ist. Mit der vorliegenden Erfindung kann ein definierter Werkzeugzustand der zumindest einen Werkzeugeinrichtung mittels der zumindest einen Verstelleinrichtung automatisiert eingestellt werden. Notwendige manuell durchzuführende Einstellarbeiten an der zumindest einen Werkzeugeinrichtung entfallen oder sind zumindest deutlich reduziert. Dies ist beispielsweise dann vorteilhaft, wenn die zumindest eine Werkzeugeinrichtung zwei Werkzeugeinheiten umfasst, wovon die eine Werkzeugeinheit eine Schneidscheibeneinheit, das heißt eine Schareinheit ist, und die andere Werkzeugeinheit eine Rolleneinheit zum Andrücken des Bodens, das heißt eine Andruckrolle ist.

Die zumindest eine Verstelleinrichtung stellt vorzugsweise einen Einstellmechanismus für zumindest eine Werkzeugeinrichtung dar, welche an der Tragvorrichtung angeordnet oder gelagert ist. Mittels der zumindest einen Verstelleinrichtung lässt sich somit eine spezifische oder gewünschte Verstellung der zumindest einen Werkzeugeinrichtung erzielen.

Gemäß einem weiteren Aspekt der vorliegenden Erfindung kann ferner vorgesehen sein, dass die Stelleinheit konfiguriert ist, eine definierte Werkzeuglage der zumindest einen Werkzeugeinrichtung zu dem Boden und/oder einen definierten Werkzeugdruck der zumindest einen Werkzeugeinrichtung auf den Boden jeweils im Wesentlichen gleichzeitig zu der Betätigung der Koppeleinheit einzustellen.

Durch die Konfiguration der Stelleinheit der zumindest einen Verstelleinrichtung wird beispielsweise im Zuge der Betätigung der Koppeleinheit eine definierte Arbeitstiefe der zumindest einen Werkzeugeinrichtung in dem Boden und/oder eine definierte Ausrichtung der zumindest einen Werkzeugeinrichtung zu dem Boden, das heißt zu der Bodenoberfläche, unmittelbar eingestellt. Dies kann entsprechend zusätzlich oder alternativ für die Einstellung des definierten Werkzeugdrucks der zumindest einen Werkzeugeinrichtung auf den Boden realisiert werden. Im Falle der Konfiguration der ersten Werkzeugeinheit als Schneidscheibeneinheit, das heißt als Schareinheit kann somit zusätzlich oder alternativ ein definierter Schardruck der zumindest einen Werkzeugeinrichtung auf den Boden eingestellt werden.

Es ist möglich, dass die Tragvorrichtung eine Rückverfestigungseinrichtung umfasst, welche zum Andrücken des Bodens konfiguriert ist, wobei die Rückverfestigungseinrichtung an der Koppeleinheit befestigt ist, um bei Betätigung der Koppeleinheit im Wesentlichen gleichzeitig zu der definierten Verstellung der zumindest einen Werkzeugeinrichtung eine definierte Rückverfestigungseinrichtungslage der Rückverfestigungseinrichtung zu dem Boden einzustellen, und/oder dass die Stelleinheit und die Rückverfestigungseinrichtung jeweils auf einander gegenüberliegenden Seiten mit der Koppeleinheit gekoppelt sind und konfiguriert sind, bei Betätigung der Koppeleinheit die Rückverfestigungseinrichtung in Richtung des Maschinenrahmens und im Wesentlichen gleichzeitig die zumindest eine Werkzeugeinrichtung in Richtung des Bodens zu bewegen.

Gemäß einem weiteren Gesichtspunkt der vorliegenden Erfindung kann vorgesehen sein, dass die zumindest eine Verstelleinrichtung und die zumindest eine Werkzeugeinrichtung einen verstellbaren Koppelgetriebemechanismus, vorzugsweise einen verstellbaren Vielgelenkmechanismus oder einen verstellbaren Parallelogramm-Mechanismus, umfassen oder ausbilden, welcher zumindest vier Gelenkstellen umfasst, wobei zwei erste Gelenkstellen, vorzugsweise an der zumindest einen Werkzeugeinrichtung, in einem Abstand zueinander angeordnet sind, welcher im Wesentlichen konstant ist; und/oder wobei zwei zweite Gelenkstellen, vorzugsweise an der zumindest einen Verstelleinrichtung, in einem Abstand zueinander angeordnet sind, welcher in Abhängigkeit der Betätigung der Koppeleinheit variabel ist.

Beispielsweise kann dadurch eine so genannte Parallelogramm-Schareinheit mit kombinierter Andruckrolleneinheit als zumindest eine Werkzeugeinrichtung bereitgestellt werden. Beispielsweise wird dadurch ermöglicht, die Parallelogramm-Schareinheit im Wesentlichen oder nahezu identisch zu einer mit nur einer Schwinge gelagerten Schareinheit zu verstellen.

Es ist möglich, dass die Koppeleinheit zur schwenkbaren Lagerung, vorzugsweise mittels eines Bolzens, an dem Maschinenrahmen konfiguriert ist, und/oder dass die Stelleinheit schwenkbar, vorzugsweise mittels eines Bolzens, an der Koppeleinheit gelagert ist, wobei vorzugsweise eine resultierende Schwenkachse der Koppeleinheit und eine resultierende Schwenkachse der Stelleinheit zueinander im Wesentlichen parallel und/oder voneinander im Wesentlichen konstant beabstandet angeordnet sind.

Dadurch wird beispielsweise eine optimierte Abstützung sowie Übertragung von Kräften und/oder Drehmomenten realisiert. Ferner zeichnet sich dadurch die zumindest eine Verstelleinrichtung beispielsweise hinsichtlich ihres Aufbaus relativ einfach und kompakt, das heißt platzsparend aus.

Gemäß einem weiteren Aspekt der vorliegenden Erfindung kann vorgesehen sein, dass die Stelleinheit zumindest ein schwenkbar gelagertes Stützelement umfasst, welches zur schwenkbaren Lagerung an dem Maschinenrahmen konfiguriert ist, wobei vorzugsweise eine Länge des zumindest einen Stützelements variabel einstellbar ist, um die Betätigung der Koppeleinheit in einem definierten Verhältnis oder nach einer definierten Funktion geometrisch linear oder nichtlinear umzuwandeln. Ferner können durch ein variabel einstellbares Stützelement beispielsweise auch Fertigungstoleranzen ausgeglichen werden.

Die Bewegung der Stelleinheit kann zu der Bewegung der Koppeleinheit in einem linearen, das heißt in einem konstanten Verhältnis oder in einem nichtlinearen Verhältnis in Relation stehen. Durch die Einstellung der Länge des Stützelements kann beispielsweise eine Schwenkbewegung der Koppeleinheit um einen bestimmten Wert in eine Schwenkbewegung der Stelleinheit um diesen bestimmten Wert multipliziert mit einem Faktor erzielt werden.

Vorzugsweise umfasst die Betätigung der Koppeleinheit ein Bewegen der Koppeleinheit in Form eines Schwenkens. Ferner umfasst eine Umwandlung der Betätigung der Koppeleinheit ein Bewegen der Stelleinheit in Form eines Schwenkens in Abhängigkeit des definierten Verhältnisses oder der definierten Funktion.

Es versteht sich, dass bei der zumindest einen Verstelleinrichtung im Zuge der Betätigung der Koppeleinheit neben kinematischen oder geometrischen Änderungen auch Kräfte und/oder Drehmomente übertragbar sind oder übertragen werden.

Es ist möglich, dass die zumindest eine Werkzeugeinrichtung über zumindest ein Dämpfungselement an der Koppeleinheit gelagert ist, wobei die zumindest eine Verstelleinrichtung eine Vorspanneinheit umfasst, welche zur Beaufschlagung des zumindest einen Dämpfungselements mit einer einstellbaren Vorspannkraft konfiguriert ist. Das zumindest eine Dämpfungselement kann insbesondere ein Federelement sein.

Gemäß einem weiteren Gesichtspunkt der vorliegenden Erfindung kann vorgesehen sein, dass die Koppeleinheit, vorzugsweise ein freies Ende der Koppeleinheit, zumindest einen Aufnahmeabschnitt für die zumindest eine Aktuatoreinrichtung umfasst, welcher zur schwenkbaren Lagerung der zumindest einen Aktuatoreinrichtung an oder gegenüber der Koppeleinheit konfiguriert ist, wobei vorzugsweise der zumindest eine Aufnahmeabschnitt in einer Seitenansicht, vorzugsweise in Richtung einer resultierenden Schwenkachse der Aktuatoreinrichtung, zumindest abschnittsweise im Wesentlichen gabelförmig konfiguriert ist.

Dadurch wird beispielsweise eine einfache Montage der zumindest einen Aktuatoreinrichtung mit der Koppeleinheit gewährleistet. Darüber hinaus kann eine effektive und genaue Betätigung der Koppeleinheit durch die zumindest eine Aktuatoreinrichtung realisiert werden.

Es ist möglich, dass die zumindest eine Werkzeugeinrichtung als eine separate, vorzugsweise autark (vor)montierbare, Werkzeugeinrichtung konfiguriert ist, welche zur Bildung individuell konfigurierbarer Werkzeugeinheiten einen Werkzeugträger umfasst, wobei vorzugsweise der Werkzeugträger über ein Stellelement mit der Stelleinheit gelenkig verbunden ist, und/oder wobei vorzugsweise der Werkzeugträger über ein Schwenkelement und zumindest ein Dämpfungselement an einem verdrehbaren Querträgerelement der Koppeleinheit gelagert ist. Gemäß einem weiteren Aspekt der vorliegenden Erfindung kann vorgesehen sein, dass die zumindest eine Werkzeugeinrichtung eine erste Werkzeugeinheit und eine zweite Werkzeugeinheit umfasst, wobei die erste Werkzeugeinheit und/oder die zweite Werkzeugeinheit an einem Werkzeugträger der zumindest einen Werkzeugeinrichtung, zumindest in einer Bewegungsrichtung der Arbeitsmaschine, voneinander beabstandet oder voneinander variabel verstellbar angeordnet sind, wobei der Werkzeugträger konfiguriert ist, dass bei Betätigung der Koppeleinheit eine definierte Werkzeuglage der zweiten Werkzeugeinheit zu dem Boden eingestellt wird und/oder dass ein definierter Werkzeugdruck der ersten Werkzeugeinheit auf den Boden eingestellt wird oder umgekehrt.

Die zumindest eine Werkzeugeinrichtung kann zumindest eine Werkzeugeinheit von Folgenden Werkzeugeinheiten umfassen: eine Schneidscheibeneinheit, um in dem Boden eine Furche zu bilden und/oder zu öffnen, wobei vorzugsweise die Schneidscheibeneinheit zwei zueinander schräg angeordnete Schneidscheiben umfasst; eine Kufeneinheit, um in dem Boden eine Furche zu bilden und/oder zu öffnen; eine Rolleneinheit, um den Boden, vorzugsweise eine Furche, zumindest teilweise anzudrücken und/oder zumindest teilweise zu schließen, und/oder um ein landwirtschaftliches Gut in dem Boden, vorzugsweise im Bereich einer Furche, zu fangen und/oder abzubremsen; und/oder eine Säeinheit mit zumindest einem Leitungselement, um ein landwirtschaftliches Gut in den Boden einzubringen, vorzugsweise in einer Furche abzulegen.

Die Säeinheit kann das zumindest eine Leitungselement zur Zuführung des landwirtschaftlichen Guts in Form von Saatgut und/oder Düngemittel umfassen. Mit anderen Worten kann das zumindest eine Leitungselement der Säeinheit als Saatrohr dienen.

Die vorliegende Erfindung betrifft nach einem zweiten allgemeinen Gesichtspunkt ein landwirtschaftliche Arbeitsmaschine, vorzugsweise zur Bearbeitung eines Bodens und/oder zur Einbringung eines landwirtschaftlichen Guts in einen Boden und/oder zum Transport eines landwirtschaftlichen Guts, mit einem Maschinenrahmen, welcher an einer Frontseite eine Zug- und/oder Montagevorrichtung aufweist, über welche die Arbeitsmaschine in einem Transportzustand und in einem Betriebszustand in einer Bewegungsrichtung gezogen werden kann, wobei an dem Maschinenrahmen, vorzugsweise an einer Heckseite des Maschinenrahmens, zumindest eine Tragvorrichtung wie hierin offenbart und zumindest eine Aktuatoreinrichtung zur Betätigung einer Koppeleinheit der zumindest einen Tragvorrichtung montiert ist.

Gemäß einem weiteren Gesichtspunkt der vorliegenden Erfindung kann vorgesehen sein, dass eine Rückverfestigungseinrichtung in dem Transportzustand als ein Fahrwerk der Arbeitsmaschine, vorzugsweise als ein Hauptfahrwerk der Arbeitsmaschine dient, wobei vorzugsweise die Rückverfestigungseinrichtung als Reifen-Packerwalze konfiguriert ist. Alternativ sind auch andere Konfigurationen der Rückverfestigungseinrichtung möglich.

Es ist auch möglich, dass die Arbeitsmaschine als sog. Anbaumaschine ausgeführt ist und diese mittels einer Montagevorrichtung in Form einer Dreipunktanhängung an ein Zugfahrzeug montierbar ist.

Es ist möglich, dass die zumindest eine Aktuatoreinrichtung als Linearaktuator konfiguriert ist oder einen Linearaktuator umfasst, welcher elektrisch, elektromechanisch, pneumatisch oder hydraulisch betätigbar konfiguriert ist, und/oder dass die zumindest eine Aktuatoreinrichtung konfiguriert ist, die Betätigung der Koppeleinheit mittels zumindest eines Anschlagelements einzustellen. Das zumindest eine Anschlagelement kann als Klemme oder als Klemmelement konfiguriert sein.

Die vorliegende Erfindung betrifft nach einem dritten allgemeinen Gesichtspunkt ein Verfahren zur Verstellung zumindest einer Werkzeugeinrichtung einer landwirtschaftlichen Arbeitsmaschine, vorzugsweise wie hierin offenbart, wobei die Koppeleinheit durch die zumindest eine Aktuatoreinrichtung betätigt wird und die Betätigung der Koppeleinheit durch die Koppeleinheit und durch die Stelleinheit umgewandelt wird und in Abhängigkeit der umgewandelten Betätigung die zumindest eine Werkzeugeinrichtung definiert verstellt wird.

Gemäß einem weiteren Aspekt der vorliegenden Erfindung kann vorgesehen sein, dass zumindest eine Sensoreinheit ein Verstellen einer Werkzeuglage der zumindest einen Werkzeugeinrichtung zu dem Boden und/oder zu dem Maschinenrahmen, und/oder eines Werkzeugdrucks der zumindest einen Werkzeugeinrichtung auf den Boden erfasst, vorzugsweise zumindest während die Koppeleinheit betätigt wird, und/oder dass die zumindest eine Sensoreinheit auf die zumindest eine Werkzeugeinrichtung wirkende Kräfte und/oder eine Arbeitstiefe der zumindest einen Werkzeugeinrichtung erfasst, vorzugsweise zumindest während die Koppeleinheit betätigt wird, und die erfasste Werkzeuglage und/oder der erfasste Werkzeugdruck und/oder die erfassten Kräfte und/oder die erfasste Arbeitstiefe an eine Kontrolleinrichtung zur Regelung und/oder Steuerung der zumindest einen Aktuatoreinrichtung übertragen wird, um die zumindest eine Werkzeugeinrichtung definiert zu verstellen. Die zumindest eine Sensoreinheit kann an der Tragvorrichtung, beispielsweise an dem Tragrahmen, oder an dem Maschinenrahmen der landwirtschaftlichen Arbeitsmaschine angeordnet sein.

Zur Vermeidung von Wiederholungen sollen rein auf die Vorrichtung der erfindungsgemäßen Tragvorrichtung und/oder der landwirtschaftlichen Arbeitsmaschine gerichtete und/oder damit in Zusammenhang offenbarte Merkmale auch als verfahrensgemäß offenbart gelten und beanspruchbar sein und umgekehrt.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: einen Teil einer landwirtschaftlichen Arbeitsmaschine und eine Tragvorrichtung gemäß einem ersten Ausführungsbeispiel der vorliegenden Erfindung in einem ersten Betriebszustand in einer ersten perspektivischen Ansicht;
- Fig. 2A: den Teil der landwirtschaftlichen Arbeitsmaschine und die Tragvorrichtung aus Figur 1 in einem Transportzustand in einer Seitenansicht;
- Fig. 2B: den Teil der landwirtschaftlichen Arbeitsmaschine und die Tragvorrichtung aus Figur 1 in einem ersten Betriebszustand in einer Seitenansicht;
- Fig. 2C: den Teil der landwirtschaftlichen Arbeitsmaschine und die Tragvorrichtung aus Figur 1 in einem zweiten Betriebszustand in einer Seitenansicht;
- Fig. 3: den Teil der landwirtschaftlichen Arbeitsmaschine und die Tragvorrichtung aus Figur 1 mit einer eingeblendeten Vorspanneinheit in der ersten perspektivischen Ansicht;
- Fig. 4: den Teil der landwirtschaftlichen Arbeitsmaschine und die Tragvorrichtung aus Figur 3 mit einer eingeblendeten Vorspanneinheit in einer zweiten perspektivischen Ansicht;
- Fig. 5A: den Teil der landwirtschaftlichen Arbeitsmaschine und die Tragvorrichtung aus Figur 1 mit eingeblendeter Vorspanneinheit in einem Transportzustand in einer Seitenansicht;
- Fig. 5B: den Teil der landwirtschaftlichen Arbeitsmaschine und die Tragvorrichtung aus Figur 1 mit eingeblendeter Vorspanneinheit in dem ersten Betriebszustand in einer Seitenansicht;
- Fig. 5C: den Teil der landwirtschaftlichen Arbeitsmaschine und die Tragvorrichtung aus Figur 1 mit eingeblendeter Vorspanneinheit in dem zweiten Betriebszustand in einer Seitenansicht;
- Fig. 6: die landwirtschaftliche Arbeitsmaschine mit der montierten Tragvorrichtung aus Figur 1 in dem zweiten Betriebszustand in einer dritten perspektivischen Ansicht.

Gleiche oder funktional äquivalente Komponenten, Einheiten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

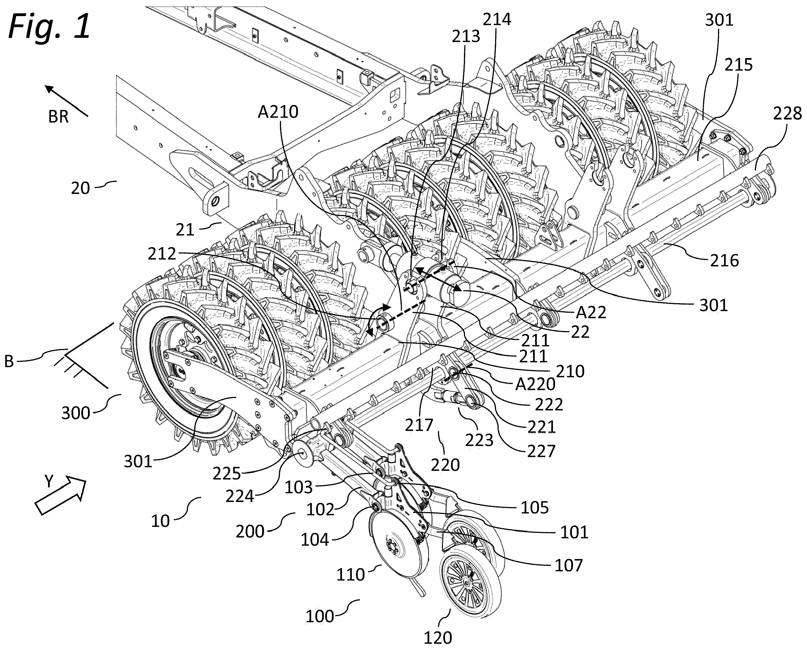

Figur 1 zeigt in einer ersten perspektivischen Ansicht einen Teil einer landwirtschaftlichen Arbeitsmaschine 20 und einer Tragvorrichtung 10 gemäß einem ersten Ausführungsbeispiel der vorliegenden Erfindung in einem ersten Betriebszustand.

Ein Betriebszustand ist vorzugsweise ein Zustand der Arbeitsmaschine 20, in welchem die Arbeitsmaschine 20 bestimmungsgemäß und/oder ordnungsgemäß, vor allem zur Gewährleistung der Funktion und Sicherheit, betrieben werden kann.

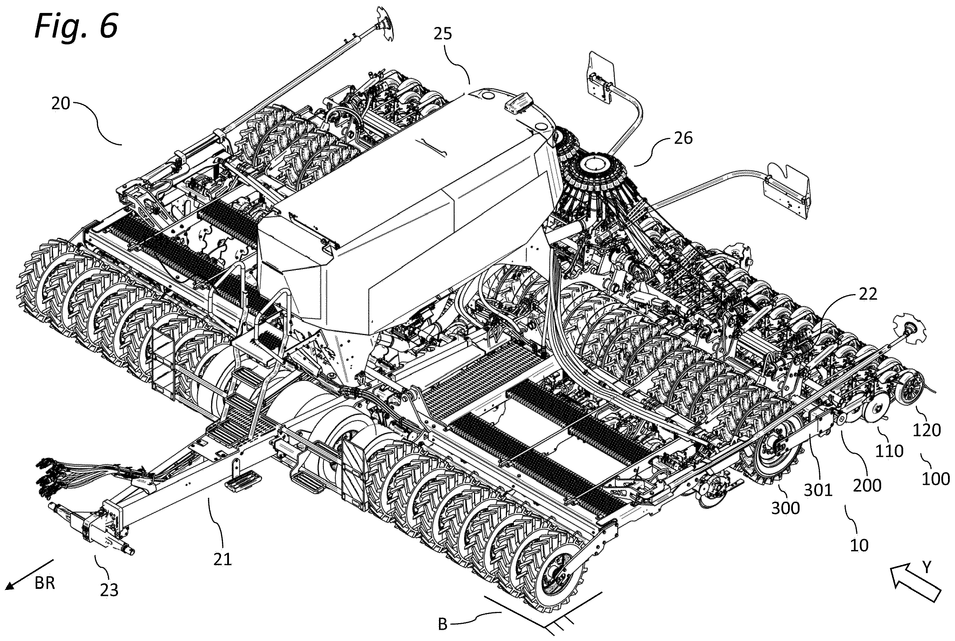

Die landwirtschaftliche Arbeitsmaschine 20 ist insgesamt, das heißt mit der montierten Tragvorrichtung 10 in Figur 6 in einer dritten perspektivischen Ansicht dargestellt. Die landwirtschaftliche Arbeitsmaschine 20 dient vorzugsweise zur Bearbeitung eines Bodens B und/oder zur Einbringung eines landwirtschaftlichen Guts in einen Boden B und/oder zum Transport eines landwirtschaftlichen Guts. Die landwirtschaftliche Arbeitsmaschine 20 wird im Folgenden auch abgekürzt als "Arbeitsmaschine" bezeichnet und anhand der Darstellung in Figur 6 beschrieben.

Figur 1 zeigt einen Teil eines Maschinenrahmens 21 der Arbeitsmaschine 20, welcher beispielsweise in Form eines Leiterrahmens als Haupttragrahmen der Arbeitsmaschine 20 ausgebildet sein kann. Die Tragvorrichtung 10 ist an dem Maschinenrahmen 21 beweglich gelagert und darüber hinaus mittels einer Aktuatoreinrichtung 22 gegenüber dem Maschinenrahmen 21 und im Weiteren gegenüber dem Boden B betätigbar gelagert, um eine Lage, das heißt eine Position sowie eine Ausrichtung der Tragvorrichtung 10 zu dem Boden B und/oder zu dem Maschinenrahmen 21 zu verändern, was nachfolgend näher erläutert wird.

Die Tragvorrichtung 10 umfasst zumindest eine Werkzeugeinrichtung 100 und vorzugsweise eine Vielzahl von Werkzeugeinrichtungen 100 oder mehrere Werkzeugeinrichtungen 100. In den Figuren sind aus Gründen der Übersichtlichkeit zwei Werkzeugeinrichtungen 100 dargestellt und eine Werkzeugeinrichtung 100 ist mit Bezugszeichen gekennzeichnet. Nachfolgend wird eine Werkzeugeinrichtung 100, vorzugsweise stellvertretend für die Vielzahl oder die mehreren Werkzeugeinrichtungen 100, näher erläutert.

Die Werkzeugeinrichtung 100 ist vorzugsweise in einem Betriebszustand der Arbeitsmaschine 20, vorzugsweise entlang einer Bewegungsrichtung BR, zur Bearbeitung des Bodens B und/oder zur Einbringung eines landwirtschaftlichen Guts in einen Boden B und/oder zum Transport eines landwirtschaftlichen Guts konfiguriert. Das landwirtschaftliche Gut kann beispielsweise ein Saatgut, beispielsweise körnerförmiges Saatgut, und/oder ein Düngemittel, beispielsweise Mineraldünger in Granulatform, sein.

Die Tragvorrichtung 10 umfasst zumindest eine Verstelleinrichtung 200 und vorzugsweise eine Vielzahl von Verstelleinrichtungen 200 oder mehrere Verstelleinrichtungen 200. Die Anzahl an Verstelleinrichtungen 200 ist vorzugsweise auf die Anzahl an Werkzeugeinrichtungen 100 entsprechend abgestimmt oder daran angepasst. In den Figuren sind aus Gründen der Übersichtlichkeit eine Verstelleinrichtung 200 und die ihr zugeordneten Einheiten und Elemente mit Bezugszeichen gekennzeichnet. Weitere Einheiten und Elemente der Verstelleinrichtung 200, welche zu den beschriebenen ähnlich oder identisch sind, sind ausgeblendet.

Die Verstelleinrichtung 200 ist zur Verstellung der Werkzeugeinrichtung 100 konfiguriert. Mit anderen Worten ist die Verstelleinrichtung 200 zur Veränderung eines Werkzeugzustands der

Werkzeugeinrichtung 100 konfiguriert. Die Verstellung der Werkzeugeinrichtung 100 oder die Veränderung des Werkzeugzustands umfasst vorzugsweise die Einstellung einer Lage der Werkzeugeinrichtung 100 und somit einer Position der Werkzeugeinrichtung 100 und/oder einer Ausrichtung der Werkzeugeinrichtung 100 zu dem Boden B und/oder zu dem Maschinenrahmen 21. Die Position der Werkzeugeinrichtung 100 kann beispielsweise eine Höhe der Werkzeugeinrichtung 100 gegenüber dem Boden B und somit ein Abstand einer definierten Stelle der Werkzeugeinrichtung 100 zu dem Boden B sein.

In einem Betriebszustand der Arbeitsmaschine 20 kann die Werkzeugeinrichtung 100 durch eine definierte Arbeitstiefe in dem Boden B und somit durch eine definierte Position und durch eine definierte Ausrichtung und somit Stellung zu dem Boden B und/oder dem Maschinenrahmen 21 gekennzeichnet sein, als in einem Transportzustand der Arbeitsmaschine 20.

Eine Ausrichtung der Werkzeugeinrichtung 100 kann beispielsweise durch einen Winkel gekennzeichnet sein, welchen die Werkzeugeinrichtung 100 gegenüber dem Boden B und/oder gegenüber dem Maschinenrahmen 21 einnimmt.

Ein Transportzustand ist vorzugsweise ein Zustand der landwirtschaftlichen Arbeitsmaschine 20, in welchem die landwirtschaftliche Arbeitsmaschine 20 bestimmungsgemäß und/oder ordnungsgemäß, vor allem zur Gewährleistung des Transports der landwirtschaftlichen Arbeitsmaschine 20 vorzugsweise auf öffentlichen Straßen und/oder Wegen, bewegt werden kann, wobei vor allem gesetzliche Vorgaben hinsichtlich Gewicht und Abmessungen der landwirtschaftlichen Arbeitsmaschine 20 eingehalten werden.

Alternativ oder zusätzlich umfasst die Verstellung der Werkzeugeinrichtung 100 oder die Veränderung des Werkzeugzustands eine Einstellung eines Werkzeugdrucks der Werkzeugeinrichtung 100 auf den Boden B. Mit anderen Worten wird eine Kraft auf die Werkzeugeinrichtung 100 aufgebracht und über die Werkzeugeinrichtung 100 auf den Boden B übertragen, um einen Werkzeugdruck auf den Boden B zu realisieren und eine Bearbeitung des Bodens B zu ermöglichen.

Die Verstelleinrichtung 200 umfasst eine Koppeleinheit 210 und eine Stelleinheit 220. Die Koppeleinheit 210 und die Stelleinheit 220 sind vorzugsweise mechanische Einheiten oder mechanische Mechanismen zur Umwandlung und/oder Übertragung von Bewegungen und/oder Kräften und/oder Drehmomenten in einem definierten Verhältnis und/oder nach einer definierten Funktion. Mit anderen Worten sind die Koppeleinheit 210 und die Stelleinheit 220 kinematische Systeme, vorzugsweise kinematisch zusammenwirkende Teilsysteme, zur Umwandlung und/oder Übertragung von Bewegungen und/oder Kräften und/oder Drehmomenten, um eine Verstellung der Werkzeugeinrichtung 100 oder eine Änderung des Werkzeugzustands zu realisieren.

Die Koppeleinheit 210 ist zur Lagerung, vorzugsweise zur schwenkbaren Lagerung, an dem Maschinenrahmen 21 und zur Betätigung durch die Aktuatoreinrichtung 22 konfiguriert. Mit anderen Worten betätigt die Aktuatoreinrichtung 22 die Koppeleinheit 210 direkt oder unmittelbar. In dem montierten Zustand, das heißt in dem Montagezustand der Tragvorrichtung 10 ist die Koppeleinheit 210 an dem Maschinenrahmen 21 schwenkbar gelagert, vorzugsweise mittels eines Bolzens 212. Die schwenkbare Lagerung der Koppeleinheit 210 und somit der Tragvorrichtung 10 insgesamt an dem Maschinenrahmen 21 ist durch die resultierende Schwenkachse A210 gekennzeichnet, welche in Figur 1 mittels einer gestrichelten Linie dargestellt ist. Die Koppeleinheit 210 umfasst zur Ausführung der Schwenkbewegung um die Schwenkachse A210 zwei als Hebel konfigurierte Koppelelemente 211. Die Koppelelemente 211 sind jeweils abschnittsweise im Wesentlichen plattenförmig und/oder bezüglich einer Ebene zueinander im Wesentlichen symmetrisch konfiguriert und umfassen jeweils ein Durchgangsloch, um den Bolzen 212 aufzunehmen. Ferner sind die Koppelelemente 211 voneinander beabstandet angeordnet.

Der Bolzen 212 ist wiederum in einem Durchgangsloch an dem Montagerahmen 21 aufgenommen, um somit die Schwenkbewegung der Koppelelemente 211 und folglich der Tragvorrichtung 10 gegenüber dem Maschinenrahmen 21 und/oder gegenüber dem Boden B zu realisieren, vorzugsweise an dem Maschinenrahmen 21 auch abzustützen.

Um eine Schwenkbewegung ausführen zu können und somit eine Betätigung der Koppeleinheit 210 und der Tragvorrichtung 10 insgesamt zu realisieren, ist die Aktuatoreinrichtung 22 ebenfalls an dem Maschinenrahmen 21 schwenkbar gelagert und darüber hinaus an der Koppeleinheit 210, das heißt an den Koppelelementen 211 schwenkbar gelagert.

Die Koppeleinheit 210, das heißt die Koppelelemente 211 weisen zur Aufnahme der Aktuatoreinrichtung 22 jeweils einen Aufnahmeabschnitt 213, 214 auf. Der jeweilige Aufnahmeabschnitt 213, 214 ist in einer Seitenansicht Y, vorzugsweise in Richtung der resultierenden Schwenkachse A22 der Aktuatoreinrichtung 22, zumindest abschnittsweise gabelförmig konfiguriert. Die Aufnahmeabschnitte 213 und 214 sind somit vorzugsweise zur einfachen Montage der Aktuatoreinrichtung 22 und somit zur schwenkbaren Lagerung der Aktuatoreinrichtung 22 gegenüber der Koppeleinheit 210 konfiguriert.

Zwischen den Koppelelementen 211 und dem Maschinenrahmen 21, der Aktuatoreinrichtung 22 und dem Maschinenrahmen 21, sowie zwischen den Koppelelementen 211 und der Aktuatoreinrichtung 22 werden somit Gelenkverbindungen mit entsprechenden Gelenkstellen ausgebildet. Eine Gelenkstelle ist vorzugsweise eine Stelle, welche eine bewegliche Verbindung, vorzugsweise schwenkbewegliche Verbindung, zwischen zwei Elementen oder im weiteren Sinne zwischen zwei Einheiten bildet.

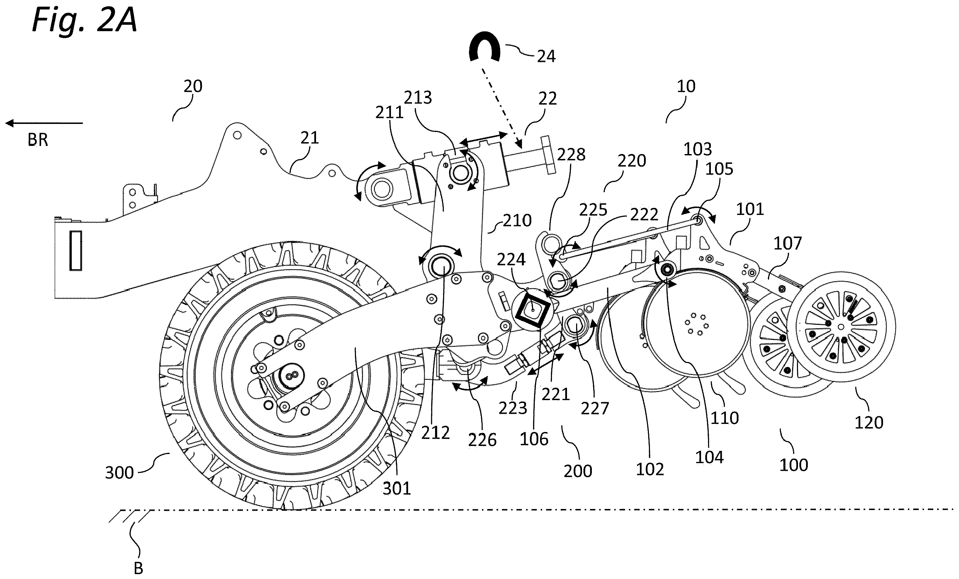

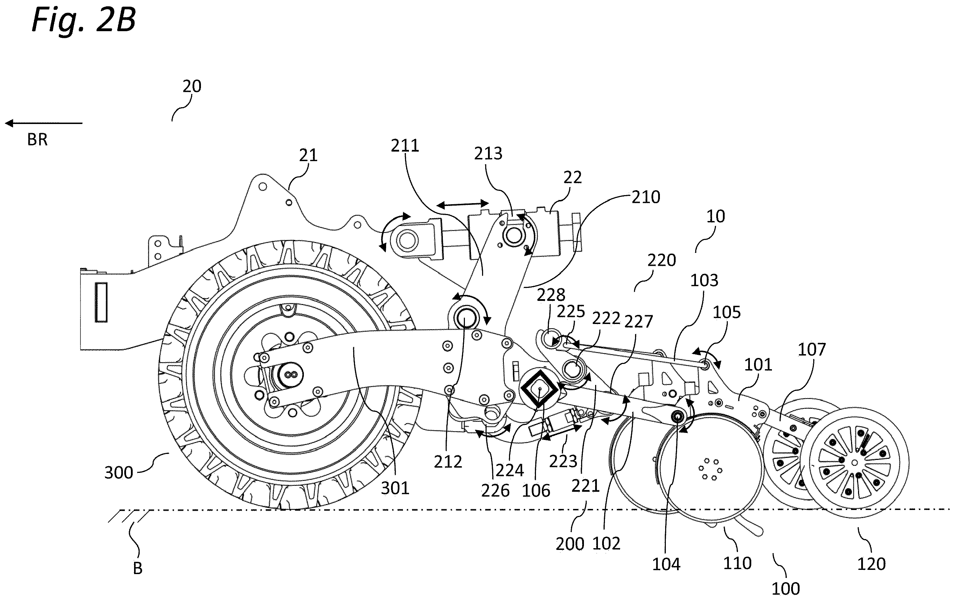

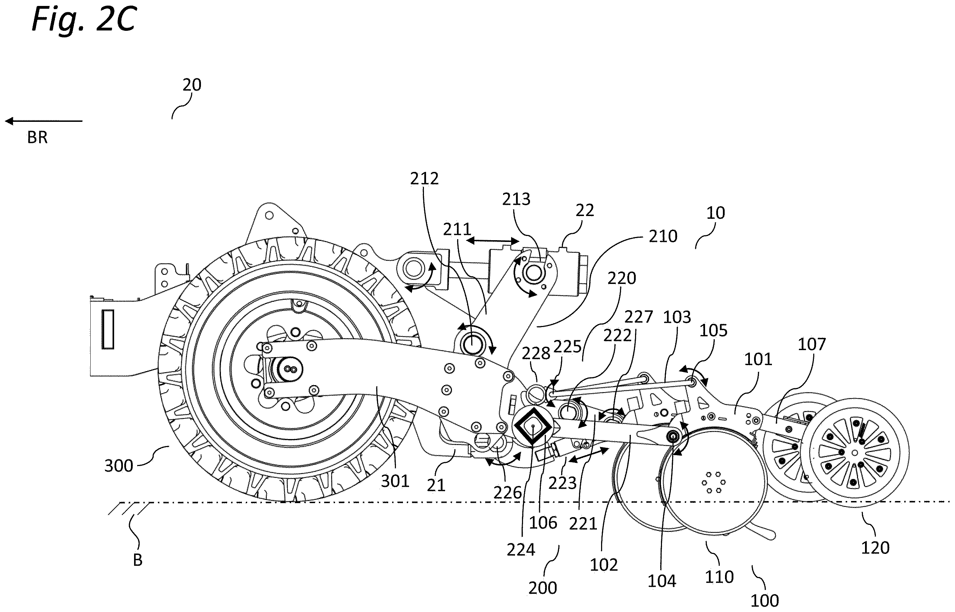

Die Aktuatoreinrichtung 22 ist beispielsweise als Linearaktuator konfiguriert oder umfasst einen Linearaktuator. Die Aktuatoreinrichtung 22 kann elektrisch, elektromechanisch, pneumatisch oder hydraulisch betätigbar konfiguriert sein. Ferner kann die Aktuatoreinrichtung 22 konfiguriert sein, die Betätigung mittels zumindest eines Anschlagelements 24 einzustellen, wie es schematisch in Figur 2 dargestellt und nachfolgend anhand der Beschreibung näher erläutert wird.

Neben den Koppelelementen 211 umfasst die Koppeleinheit 210 einen Tragrahmen 215, welcher vorzugsweise als Haupttragrahmen der Tragvorrichtung 10 konfiguriert ist. Bei dem Ausführungsbeispiel in Figur 1 ist der Tragrahmen 215 im Wesentlichen in Form eines Vierkantrohrs ausgebildet, welcher sich quer zu der Bewegungsrichtung BR und/oder im Wesentlichen parallel in Richtung der resultierende Schwenkachse A22 der Aktuatoreinrichtung 22 und/oder im Wesentlichen parallel in Richtung der resultierenden Schwenkachse A210 der Koppelelemente 211 erstreckt. Der Tragrahmen 215 als Vierkantrohr hat vorzugsweise einen im Wesentlichen quadratischen Querschnitt und/oder außen abgerundete Längskanten und ist durch eine ausreichende Biegesteifigkeit und/oder Torsionssteifigkeit gekennzeichnet. Der Tragrahmen 215 dient hinsichtlich der Tragvorrichtung 10 vorzugsweise als tragende Struktur für die weiteren Elemente und Einheiten der Tragvorrichtung 10.

Die Stelleinheit 220 der Verstelleinrichtung 200 ist zur Einstellung einer Lage der Werkzeugeinrichtung 100 zu dem Maschinenrahmen 21 und/oder zu dem Boden B konfiguriert.

Erfindungsgemäß sind die Koppeleinheit 210 und die Stelleinheit 220 der Verstelleinrichtung 200 miteinander beweglich gekoppelt und konfiguriert, eine Betätigung der Koppeleinheit 210 und somit eine Bewegung der Koppeleinheit 210 umzuwandeln und in Abhängigkeit der umgewandelten Betätigung die Werkzeugeinrichtung 100 definiert zu verstellen und/oder einen definierten Werkzeugzustand der Werkzeugeinrichtung 100 einzustellen. Mit anderen Worten umfasst die Verstelleinrichtung 200 Gelenkverbindungen und somit Gelenkstellen, welche durch die Koppeleinheit 210 und die Stelleinheit 220 gebildet werden.

Die Stelleinheit 220 ist vorzugsweise konfiguriert, eine definierte Werkzeuglage der Werkzeugeinrichtung 100 zu dem Boden B und/oder zu dem Maschinenrahmen 21, und/oder einen definierten Werkzeugdruck der Werkzeugeinrichtung 100 auf den Boden jeweils im Wesentlichen gleichzeitig zu der Betätigung der Koppeleinheit 210 einzustellen. Die definierte Werkzeuglage kann eine definierte resultierende Werkzeuglage sein und somit eine definierte resultierende Position einer bestimmten Stelle der Werkzeugeinrichtung 100 zu dem Boden B und/oder eine definierte resultierende Ausrichtung der Werkzeugeinrichtung 100 zu dem Boden B kennzeichnen. Der definierte Werkzeugdruck kann ein definierter resultierender mittlerer Werkzeugdruck der Werkzeugeinrichtung 100 sein.

Ferner umfasst die Tragvorrichtung 10 eine Rückverfestigungseinrichtung 300, welche zum Andrücken des Bodens B, vorzugsweise in einem Betriebszustand der Arbeitsmaschine 20, konfiguriert ist. Die Rückverfestigungseinrichtung 300 ist bei dem in den Figuren dargestellten Ausführungsbeispiel als Reifen-Packerwalze mit Stollenreifen ausgeführt. Alternativ sind andere Konfigurationen der Rückverfestigungseinrichtung 300 möglich.

Die Rückverfestigungseinrichtung 300 mittels Tragelementen 301 an der Koppeleinheit 210, das heißt an dem Tragrahmen 215, befestigt ist, um bei Betätigung der Koppeleinheit 210 mittels der Aktuatoreinrichtung 22 im Wesentlichen gleichzeitig zu der definierten Verstellung der Werkzeugeinrichtung 100 eine definierte Rückverfestigungseinrichtungslage, das heißt Lage der Rückverfestigungseinrichtung 300 zu dem Boden B und/oder zu dem Maschinenrahmen 21 einzustellen. Die Tragelemente 301 sind im Wesentlichen plattenförmig konfiguriert.

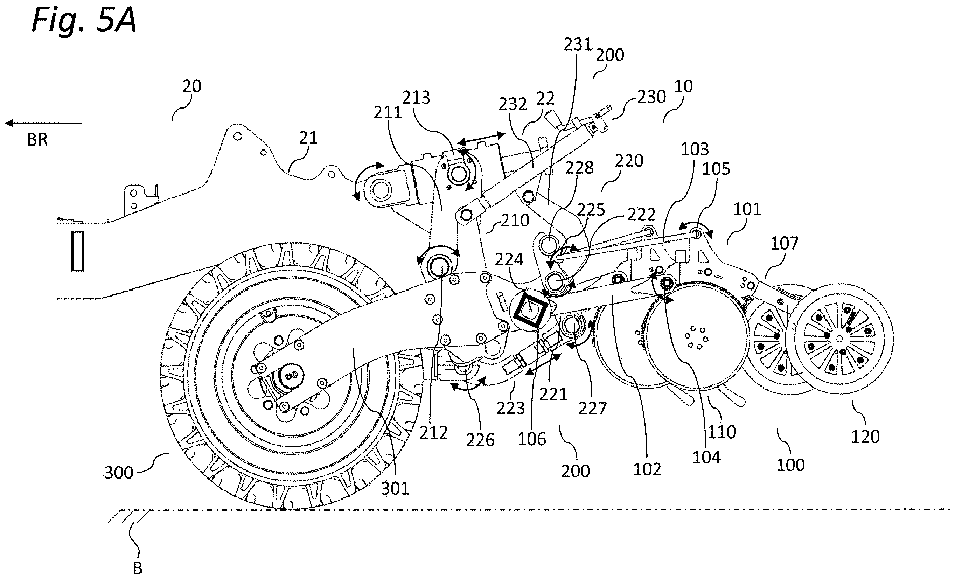

Zusätzlich sind die Stelleinheit 220 und die Rückverfestigungseinrichtung 300 jeweils auf einander gegenüberliegenden Seiten mit der Koppeleinheit 210 gekoppelt und konfiguriert, bei Betätigung der Koppeleinheit 210, vorzugsweise in einem Betriebszustand der Arbeitsmaschine 20, die Rückverfestigungseinrichtung 300 in Richtung des Maschinenrahmens 21 und im Wesentlichen gleichzeitig die zumindest eine Werkzeugeinrichtung 100 in Richtung des Bodens B zu bewegen, was vor allem aus den Darstellungen in den Figuren 2A bis 2C und 5A bis 5C hervorgeht und nachfolgend näher erläutert wird.

Die Stelleinheit 220 umfasst ein Schwenkelement 221, welches mittels eines Bolzens 222 schwenkbar an der Koppeleinheit 210 gelagert ist. Der Bolzen 222 ist in einem Durchgangsloch eines Lagerungselements 217 der Koppeleinheit 210 aufgenommen, welches an dem Tragrahmen 215 befestigt ist. Hierdurch ergibt sich eine resultierende Schwenkachse A220 des Schwenkelements 221 und somit eine schwenkbare Lagerung der Schwenkeinheit 220 an der Koppeleinheit 210. Die resultierende Schwenkachse A210 der Koppeleinheit 210 und die resultierende Schwenkachse A220 der Stelleinheit 220 sind zueinander im Wesentlichen parallel und/oder voneinander beabstandet angeordnet.

Das Lagerungselement 217 ist im Wesentlichen flach und/oder im Wesentlichen plattenförmig konfiguriert und umfasst eine weitere Durchgangsbohrung, durch welche sich zur Lagerung das Querträgerelement 216 hindurch erstrecket. Das Querträgerelement 216 ist vorzugsweise im Wesentlichen als Vierkantrohr oder im Wesentlichen als Vierkantstange ausgebildet und erstreckt sich im Wesentlichen parallel zu dem Tragrahmen 215 und/oder im Wesentlichen in Richtung der Schwenkachse A220. Das Querträgerelement 216 ist zur Einstellung einer Vorspannung bei der Werkzeugeinrichtung 100 bei entsprechender Konfiguration der Werkzeugeinrichtung 100 verdrehbar gelagert, was nachfolgend noch näher erläutert wird.

Wie sich aus der Darstellung in Figur 1 ergibt, sind weitere Elemente und Einheiten an dem Tragrahmen 215 befestigt und/oder montiert, welche allerdings aus Gründen der Übersichtlichkeit nicht näher gekennzeichnet sind.

Das Schwenkelement 221 ist vorzugsweise in Form eines Doppelhebels oder zweier zueinander beabstandeter Hebel konfiguriert und an einem ersten Ende mit dem Stellträgerelement 228 der Stelleinheit 220 und an einem zweiten Ende mit dem Stützelement 223 der Stelleinheit 220 verbunden. Das erste Ende und das zweite Ende des Schwenkelements 221 sind zueinander gegenüberliegend angeordnet, sodass sich zwischen diesen Enden die Gelenkstelle zwischen der Koppeleinheit 210 und der Stelleinheit 220 ergibt, welche durch den Bolzen 222 entlang der Achse A220 gebildet wird. Das Schwenkelement 221 ist an dem Stellträgerelement 228 befestigt, das heißt mit dem Stellträgerelement 228 fest verbunden, beispielsweise mittels einer Schweißverbindung. Die Stelleinheit 220 umfasst, wie oben angegeben, das schwenkbar gelagerte Stützelement 223, welches zur schwenkbaren Lagerung an dem Maschinenrahmen 21 konfiguriert und im montierten Zustand an dem Maschinenrahmen 21 schwenkbar gelagert ist. Mit anderen Worten wird im montierten Zustand die Gelenkstelle 226 zwischen dem Maschinenrahmen 21 und dem Stützelement 223 gebildet, was beispielsweise aus der Darstellung in den Figuren 2A bis 2C hervorgeht. Ferner wird zwischen dem Stützelement 223 und dem Schwenkelement 221 die Gelenkstelle 227 gebildet.

Das Stützelement 223 ist hinsichtlich seiner Erstreckung in Längsrichtung, das heißt hinsichtlich seiner Länge variabel einstellbar, vorzugsweise manuell und/oder dauerhaft einstellbar. Die Einstellbarkeit ermöglicht wiederum eine geometrisch lineare oder nichtlineare Umwandlung der Betätigung der Koppeleinheit 210 in einem definierten Verhältnis oder nach einer definierten Funktion in dem Zusammenwirken mit der Stelleinheit 220.

Somit wird eine Schwenkbewegung infolge der Betätigung der Koppeleinheit 210 und hier der Koppelelemente 211 durch die Aktuatoreinrichtung 22 in eine Schwenkbewegung der Stelleinheit 220, das heißt des Schwenkelements 221 in einem konstanten Verhältnis oder in einem sich verändernden Verhältnis umgewandelt, um die Stelleinheit 220 und somit das Schwenkelement 221 in Bewegung zu versetzen und über das Schwenkelement 221 die Werkzeugeinrichtung 100 definiert einzustellen.

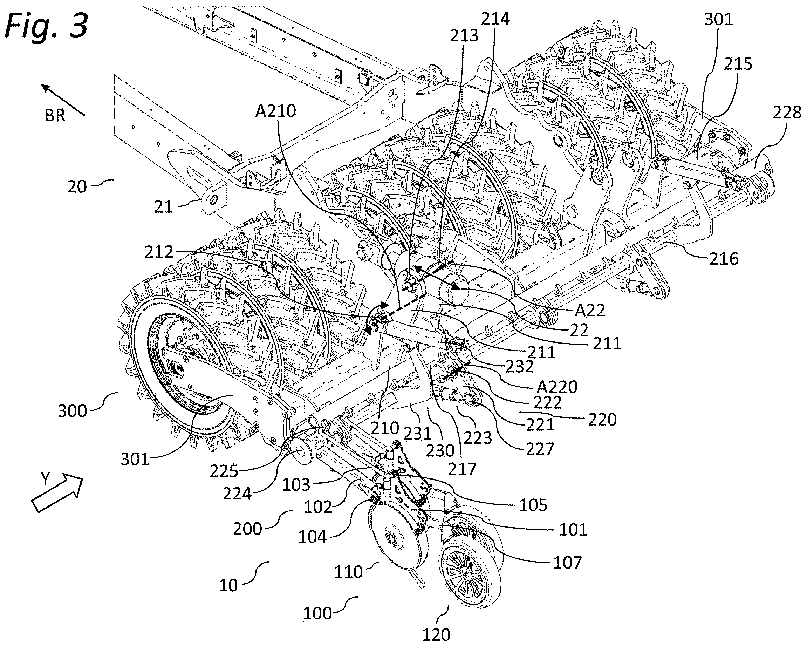

Wie sich aus den Darstellungen in den Figuren 1 bis 2C und in den weiteren Figuren 3 bis 6 ergibt, umfasst die Werkzeugeinrichtung 100 einen Werkzeugträger 101, welcher zur Bildung und/oder zur Anordnung individuell konfigurierbarer Werkzeugeinheiten 110, 120 konfiguriert ist. Der Werkzeugträger 101 ist im Wesentlichen flach und/oder im Wesentlichen plattenförmig konfiguriert. Der Werkzeugträger 101 ist über ein Stellelement 103 mit der Stelleinheit 220 gelenkig verbunden. Das Stellelement 103 ist vorzugsweise in Form einer Stange von konstanter und somit unveränderlicher Länge konfiguriert und aufgrund der gelenkigen Verbindung an dem Werkzeugträger 101 schwenkbar gelagert und an dem Stellträgerelement 228 schwenkbar gelagert. Durch die vorliegende Erfindung ist es beispielsweise nicht notwendig, dass Stellelement 103 einstellbar zu machen, um eine definierte Lage der Werkzeugeinrichtung 100 und/oder einen definierten Werkzeugdruck der Werkzeugeinrichtung 100 auf den Boden B in einem Betriebszustand zu realisieren.

Zusätzlich ist der Werkzeugträger 101 über ein Schwingenelement 102 und zumindest ein Dämpfungselement 106 an dem Querträgerelement 216 der Koppeleinheit 210 gelagert. Das Dämpfungselement 106 ist in den Figuren 2A bis 2C und 5A bis 5C sehr vereinfacht und schematisch dargestellt.

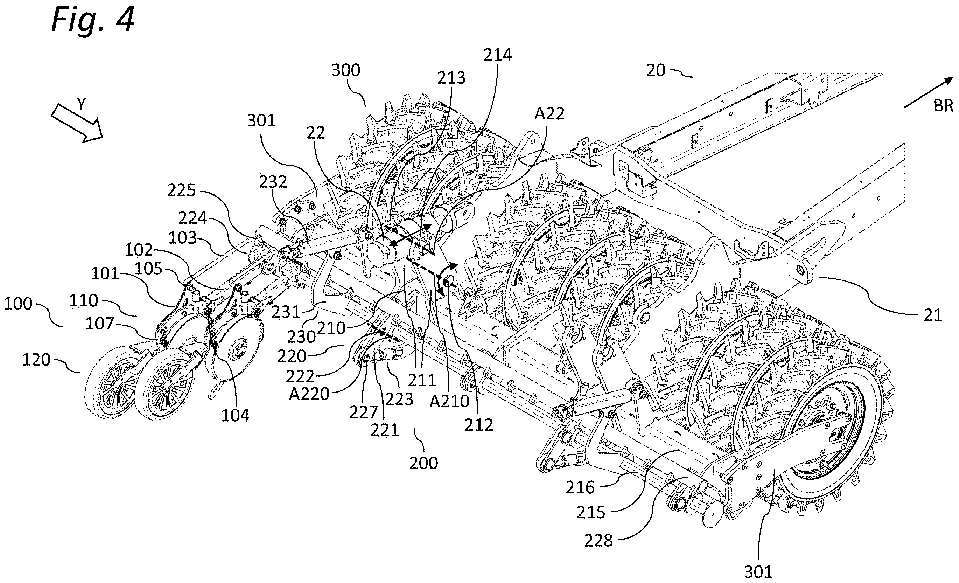

Die Werkzeugeinrichtung 100 ist als eine separate, vorzugsweise autark (vor)montierbare, Werkzeugeinrichtung 100 konfiguriert. Somit kann die Werkzeugeinrichtung 100 beispielsweise unabhängig von weiteren Einheiten und Elementen der Tragvorrichtung 10 und/oder der Arbeitsmaschine 20 montiert (zusammengebaut), demontiert (zerlegt), konfiguriert, eingestellt und/oder gewartet werden. Die Werkzeugeinrichtung 100 umfasst eine erste Werkzeugeinheit 110 und eine zweite Werkzeugeinheit 120. Die erste Werkzeugeinheit 110 ist bei dem dargestellten Ausführungsbeispiel direkt oder unmittelbar an dem Werkzeugträger 101 angeordnet. Die zweite Werkzeugeinheit 120 ist über ein Werkzeugtragelement 107 an dem und/oder mit dem Werkzeugträger 101 verbunden. Das Werkzeugtragelement 107 ist als flach gewalzte Stange konfiguriert (siehe hierzu beispielsweise die Darstellung in Figur 4). Das Werkzeugtragelement 107 kann Bestandteil des Werkzeugträgers 101 sein. Mit anderen Worten kann der Werkzeugträger 101 auch einteilig und/oder integral einstückig konfiguriert sein. Wie sich aus den Darstellungen in den Figuren ergibt, sind die erste Werkzeugeinheit 110 und die zweite Werkzeugeinheit 120 mit einem konstanten Abstand zueinander angeordnet, allerdings über zumindest das Stellelement 103 in ihrer Lage gegenüber dem Maschinenrahmen 21 und/oder gegenüber dem Boden B einstellbar. Dies wird mitunter auch dadurch realisiert, dass der Werkzeugträger 101 über das Schwingenelement 102 und über das Dämpfungselement 106 an dem verdrehbaren Querträgerelement 216 der Koppeleinheit 210 gelagert ist. Das Dämpfungselement 106 umfasst vorzugsweise eine Gummischnurlagerung oder ist als Gummischnurlagerung konfiguriert. Alternativ kann das Dämpfungselement 106 eine Blattfederlagerung umfassen oder als Blattfederlagerung konfiguriert sein.

Es ist auch möglich, dass durch die Konfiguration des Werkzeugtragelements 107 und/oder durch seine Anordnung an dem Werkzeugträger 101 eine Lage der zweiten Werkzeugeinheit 120 zu der Lage der ersten Werkzeugeinheit 110 variabel verstellbar ist.

Das Dämpfungselement 106 ist zwischen dem Schwingenelement 102 und dem Querträgerelement 216 als Bindeglied angeordnet, womit eine in ihrer Wirkung begrenzt schwenkbare Lagerung gegeben ist. Mit anderen Worten sorgt das Schwingenelement 102 für die Anordnung, das heißt die Anbindung der Werkzeugeinrichtung 100 an der Koppeleinheit 210. Mechanische Belastungen, wie beispielsweise Stöße oder Schläge, welche auf die Werkzeugeinrichtung 100 im Zuge des Bearbeitungszustands einwirken, beispielsweise durch kollidierende Feldsteine, werden über das Schwingenelement 102 übertragen und an dem Dämpfungselement 106 abgefangen, um eine weitere Übertragung auf die weiteren Elemente der Koppeleinheit 210 und sodann auf den Maschinenrahmen 21 zu verhindern und/oder zumindest zu verringern.

Durch das Schwingenelement 102 und durch das Stellelement 103 werden zusammen mit dem Werkzeugträger 101 die Gelenkstellen 104 und 105 gebildet. Darüber hinaus werden durch das Schwingenelement 102 und durch das Stellelement 103 zusammen mit dem Querträgerelement 216 und mit dem Stellträgerelement 228 die Gelenkstelle 224 auf der Seite der Koppeleinheit 210 und die Gelenkstelle 225 auf der Seite der Stelleinheit 220 gebildet. Jeweilige oder zugehörige resultierende Schwenkachsen sind in den Figuren aus Gründen der Übersichtlichkeit nicht dargestellt.

Mit den Gelenkstellen 104 und 105 sind zwei erste Gelenkstellen an der Werkzeugeinrichtung 100 gegeben, welche in einem Abstand zueinander angeordnet ist, welcher konstant ist. Mit den Gelenkstellen 224 und 225 sind zwei zweite Gelenkstellen an der Verstelleinrichtung 200 gegeben, welche in einem Abstand zueinander angeordnet sind, welcher in Abhängigkeit der Betätigung der Koppeleinheit 210 variabel ist.

Die erste Werkzeugeinheit 110 ist als Schneidscheibeneinheit 110 konfiguriert, um in dem Boden B eine Furche zu bilden und/oder zu öffnen. Die Schneidscheibeneinheit 110 umfasst vorzugsweise zwei zueinander schräg angeordnete Schneidscheiben. Dadurch wird beispielsweise ein im Wesentlichen gleichmäßiger Feldaufgang nach einer Aussaat gewährleistet. Die zweite Werkzeugeinheit 120 ist als Rolleneinheit konfiguriert, um den Boden B, vorzugsweise die von der Schneidscheibeneinheit 110 gebildete und/oder geöffnete Furche, anzudrücken. Mit anderen Worten ist die Rolleneinheit 110 als Andruckrolle konfiguriert. Die Werkzeugeinrichtung 100 umfasst weitere Werkzeugeinheiten, wie beispielsweise eine Säeinheit, um ein landwirtschaftliches Gut über ein Zuführelement und Abgabeelement und somit über ein Leitungselement der Säeinheit in den Boden B einzubringen, vorzugsweise in der Furche abzulegen. Die Säeinheit und insgesamt die Säeinrichtung ist in den Figuren 1 bis 5C ausgeblendet.

Alternativ kann die Werkzeugeinrichtung 100 auch andere Werkzeugeinheiten 110, 120, als die hier beschriebenen Werkzeugeinheiten 110, 120 umfassen.

Bei dem dargestellten Ausführungsbeispiel ist die Werkzeugeinrichtung 100 somit eine kombinierte Werkzeugeinrichtung 100 mit einer Doppelscheibenschareinheit 110 und mit einer Andruckrolleneinheit 120.

Aus der Darstellung in Figur 1 sowie den weiteren Figuren ergibt sich, dass die Verstelleinrichtung 200 und die Werkzeugeinrichtung 100 einen verstellbaren Koppelgetriebemechanismus 102, 103; 104, 105; 224, 225, vorzugsweise eine verstellbaren Vielgelenkmechanismus oder einen verstellbaren Parallelogramm-Mechanismus, umfassen oder ausbilden, welcher die zumindest vier Gelenkstellen 104, 105 und 224, 225 umfasst.

Figur 2A zeigt den Teil der Arbeitsmaschine 20 und die Tragvorrichtung 10 aus Figur 1 in einem Transportzustand in einer Seitenansicht (siehe hierzu den mit "Y" gekennzeichneten Pfeil in Figur 1).

In Figur 2A ist schematisch ein Anschlagelement 24 eingeblendet, welches zur Einstellung der Aktuatoreinrichtung 22, das heißt zur Einstellung eines Hubweges der Aktuatoreinrichtung 22 konfiguriert ist. Die Einstellung mittels des Anschlagelements 24, welches vorzugsweise als Clip oder als Klemme konfiguriert ist, erfolgt durch Aufstecken auf die Kolbenstange der Aktuatoreinrichtung 22. Das Anschlagelement 24 ist somit konfiguriert, sodass es verliersicher aufgesteckt werden kann. Natürlich können entlang der Kolbenstange auch mehrere Anschlagelemente 24 in Reihe aufgesteckt werden, um den effektiven oder resultierenden Hubweg der Aktuatoreinrichtung 22 und somit die Betätigung der Koppeleinheit 210 einzustellen, was sich wiederum auf die Verstellung der Werkzeugeinrichtung 100 entsprechend auswirkt.

In der Darstellung in Figur 2A befindet sich die Aktuatoreinrichtung 22 in einem ersten Anschlagzustand, das heißt in einer Ausgangsposition. Die Rückverfestigungseinrichtung 300 ist in diesem Zustand von dem Maschinenrahmen 21 maximal weg geschwenkt. Die Werkzeugeinheit 100 ist zu dem Boden B maximal beabstandet, sodass die Übertragung eines entsprechenden Teils der Gewichtskraft der Arbeitsmaschine 20 ausschließlich über die Rückverfestigungseinrichtung 300 erfolgt. Die Rückverfestigungseinrichtung 300 ist konfiguriert, in dem Transportzustand als ein Fahrwerk der Arbeitsmaschine 20, vorzugsweise als ein Hauptfahrwerk der Arbeitsmaschine 20, zu dienen. Die Werkzeugeinrichtung 100 ist in diesem Zustand durch eine definierte Position und durch eine definierte Ausrichtung gekennzeichnet, welche vorzugsweise über das einstellbare Stützelement 223 initial eingestellt werden kann. Weitere Einstellungen werden nicht benötigt und sind auch nicht notwendig.

Zur Veranschaulichung der Bewegungsmöglichkeiten der jeweiligen Einheiten und Elemente sind an Gelenkstellen und Schwenklagerungen jeweilige gekrümmte Doppelpfeile dargestellt, welche sich auch in den Figuren 2B, 2C sowie in den Figuren 5A bis 5C befinden.

Figur 2B zeigt den Teil der Arbeitsmaschine 20 und die Tragvorrichtung 10 aus Figur 1 in einem ersten Betriebszustand in einer Seitenansicht (siehe hierzu den mit "Y" gekennzeichneten Pfeil in Figur 1).

Der in Figur 2B dargestellte erste Betriebszustand ist durch eine geringe Arbeitstiefe der Werkzeugeinrichtung 100, vor allem der ersten Werkzeugeinheit 110, in dem Boden B und/oder zu dem Boden B gekennzeichnet, womit eine bestimmte Lage und somit Position und Ausrichtung miteinhergehend ist.

Die Koppeleinheit 210 ist in dieser Ansicht aufgrund der Betätigung der Aktuatoreinrichtung 22 um den Bolzen 212 im Uhrzeigersinn geschwenkt. Gleichzeitig ist die Rückverfestigungseinrichtung 300 in Richtung des Maschinenrahmens 21 geschwenkt, wobei der Maschinenrahmen 21 aufgrund der Anordnung der Rückverfestigungseinrichtung 300 mit den Trageelementen 301 einen geringeren Abstand, das heißt eine geringere Höhe zu dem Boden B eingenommen hat. Zugleich ist auch die Werkzeugeinrichtung 100 gegenüber ihrer Lage in dem Transportzustand verstellt. Die Verstellung erfolgt infolge der Betätigung der Koppeleinheit 210 und der damit einhergehenden Umwandlung dieser Betätigung zusammen mit der Stelleinheit 220 über die entsprechenden, beschriebenen Lagerungen 212, 222, 226, 227 und Gelenkstellen 104, 105; 224, 225.

Bei dem in Figur 2B dargestellten Zustand sind das Schwingenelement 102 und das Stellelement 103 in etwa parallel zueinander angeordnet. Das Schwenkelement 221 ist in dieser Ansicht im Vergleich zu seinem Ausgangszustand entgegen dem Uhrzeigersinn geschwenkt. Die mit der Betätigung der Koppeleinheit 210 miteinhergehende Schwenkbewegung des Schwenkelements 221 der Stelleinheit 220 wird vor allem durch das Stützelement 223 bedingt und stellt eine Umwandlung der Betätigung der Koppeleinheit 210 in einem definierten Verhältnis oder nach einer definierten Funktion dar.

Figur 2C zeigt den Teil der Arbeitsmaschine 20 und die Tragvorrichtung 10 aus Figur 1 in einem zweiten Betriebszustand in der Seitenansicht (siehe hierzu den mit "Y" gekennzeichneten Pfeil in Figur 1). Der zweite Betriebszustand ist vorzugsweise ein Hauptbetriebszustand der Arbeitsmaschine 20.

Die Aktuatoreinrichtung 22 hat einen maximalen Hubweg erreicht, was eine maximale Betätigung der Koppeleinheit 210 der Verstelleinrichtung 200 zur Folge hat. Mit anderen Worten befindet sich die Aktuatoreinrichtung 22 in einem zweiten Anschlagzustand. Die Rückverfestigungseinrichtung 300 ist weiter in Richtung des Maschinenrahmens 21 geschwenkt, wobei eine weitere Bewegung in Form einer Absenkung des Maschinenrahmens 21 in Richtung des Bodens B miteinhergehend ist. Gleichzeitig ist die Werkzeugeinrichtung 100 und hier vor allem die erste und die zweite Werkzeugeinheit 110 und 120 definiert verstellt. Mit anderen Worten befindet sich die erste Werkzeugeinheit 110 und die zweite Werkzeugeinheit 120 in einer definierten und somit spezifischen oder gewünschten Werkzeuglage zu dem Boden B und/oder übt einen definierten und somit spezifischen oder gewünschten Werkzeugdruck auf den Boden B aus. Die Werkzeugeinrichtung 100 kann in diesem Zustand ihre bestimmungsgemäße Funktion, wie oben beschrieben, erfüllen.

Bei der Darstellung in Figur 2C wird deutlich, dass sich vor allem die Schneidscheibeneinheit 110 als erste Werkzeugeinheit 110 in einer definierten Arbeitstiefe in dem Boden B befindet und die zweite Werkzeugeinheit 120 aufgrund der Verstelleinrichtung 200 und mittels des Stellelements 103 gegenüber der Arbeitstiefe der ersten Werkzeugeinheit 110 definiert versetzt verstellt ist, welche durch eine geringere Arbeitstiefe gekennzeichnet ist. Damit einhergehend ist allerdings wiederum ein definierter Werkzeugdruck der ersten Werkzeugeinheit 110 auf den Boden B und umgekehrt.

Die vorliegende Erfindung bietet demnach die Möglichkeit, die Werkzeugeinrichtung 100, das heißt die Werkzeugeinheiten 110, 120 über die Betätigung der Koppeleinheit 210 mehr oder weniger automatisiert definiert zu verstellen, und zwar hinsichtlich der Werkzeuglage und/oder hinsichtlich des Werkzeugdrucks.

Die Figuren 2A bis 2C zeigen jeweils unterschiedliche Werkzeuglagen der Werkzeugeinrichtung 100 im Zuge einer Betätigung der Koppeleinheit 210 durch die Aktuatoreinrichtung 22 im Rahmen eines Verfahrens zur Einstellung der Werkzeugeinrichtung 100 der Arbeitsmaschine 20.

Figur 3 zeigt den Teil der Arbeitsmaschine 20 und die Tragvorrichtung 10 aus Figur 1 mit einer eingeblendeten Vorspanneinheit 230 in der ersten perspektivischen Ansicht. Die Verstelleinrichtung 200 der Tragvorrichtung 10 umfasst die Vorspanneinheit 230. Die Vorspanneinheit 230 dient zur Beaufschlagung des Dämpfungselements 106 mit einer einstellbaren Vorspannkraft über das Querträgerelement 216. Das Aufbringen einer Vorspannkraft erfolgt über ein Verdrehen des Querträgerelements 216 in einem definierten Winkelbereich. Das Verdrehen wird durch einen Spannhebel 231 realisiert, welcher mit dem Querträgerelement 216 fest verbunden ist. Der Spannhebel 231 wird wiederum mittels eines Spannwerkzeugs 232 betätigt, welches bei dem dargestellten Ausführungsbeispiel eine manuell bedienbare und an dem Tragrahmen 215 schwenkbar gelagerte Spindel umfasst. Über die Spanneinheit 230 und das Querträgerelement 216 kann eine Vorspannung an dem Dämpfungselement 106, das heißt an der Gelenkstelle 224 aufgebracht werden. Somit kann eine Initialeinstellung des Schwingenelements 102 und damit auch der Werkzeugeinrichtung 100 gewährleistet werden.

Figur 4 zeigt den Teil der Arbeitsmaschine 20 und die Tragvorrichtung 10 aus Figur 3 mit der eingeblendeten Vorspanneinheit 230 in einer zweiten perspektivischen Ansicht.

Figur 5A zeigt den Teil der Arbeitsmaschine 20 und die Tragvorrichtung 10 aus Figur 1 mit der eingeblendeten Vorspanneinheit 230 in dem Transportzustand in einer Seitenansicht (siehe hierzu den mit "Y" gekennzeichneten Pfeil in Figur 1).

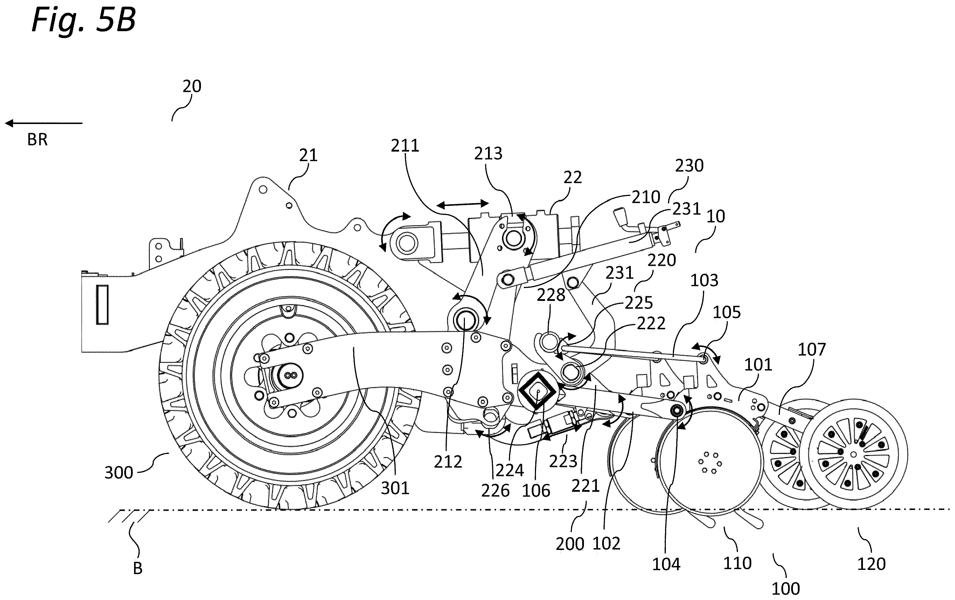

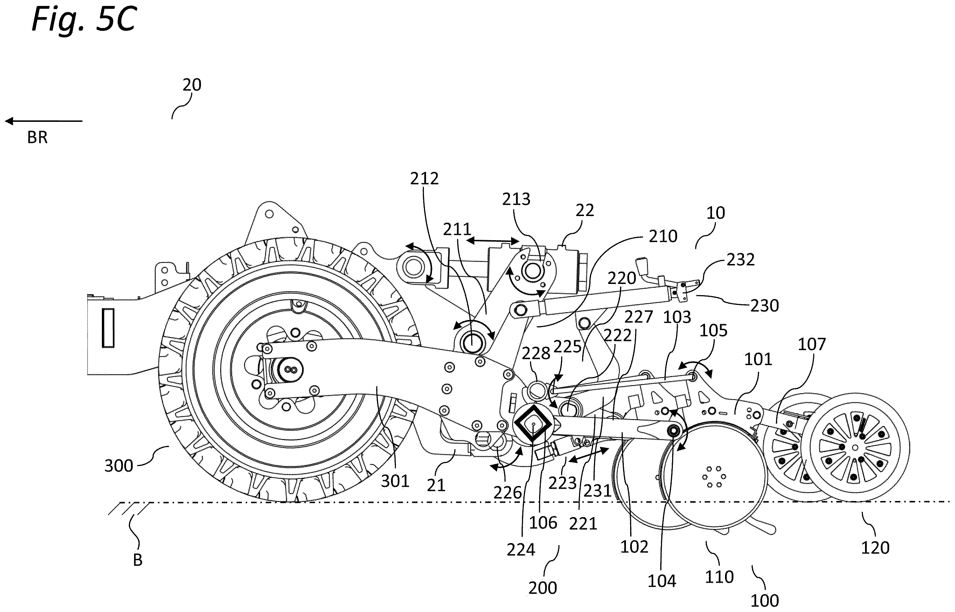

Figur 5B zeigt den Teil der Arbeitsmaschine 20 und die Tragvorrichtung 10 aus Figur 1 mit der eingeblendeten Vorspanneinheit 230 in dem ersten Betriebszustand in einer Seitenansicht (siehe hierzu den mit "Y" gekennzeichneten Pfeil in Figur 1) und Figur 5C zeigt den Teil der Arbeitsmaschine 20 und die Tragvorrichtung 10 aus Figur 1 mit der eingeblendeten Vorspanneinheit 230 in dem zweiten Betriebszustand in einer Seitenansicht (siehe hierzu den mit "Y" gekennzeichneten Pfeil in Figur 1).

Figur 6 zeigt die Arbeitsmaschine 20 insgesamt mit der montierten Tragvorrichtung 10 aus Figur 1 in dem zweiten Betriebszustand in einer dritten perspektivischen Ansicht.

Die Arbeitsmaschine 20 gemäß der vorliegenden Erfindung ist vorzugsweise eine mobile und/oder anhängbare Arbeitsmaschine 20 zur Bearbeitung eines Bodens B und/oder zur Einbringung eines landwirtschaftlichen Guts in einen Boden B. Die Arbeitsmaschine 20 umfasst den Maschinenrahmen 21, welcher an einer Frontseite eine Zugvorrichtung 23 aufweist, über welche die Arbeitsmaschine 20 in einem Transportzustand und in einem Betriebszustand in einer Bewegungsrichtung BR bewegt, das heißt gezogen werden kann. Mit anderen Worten ist die Arbeitsmaschine 20 vorzugsweise in einem Transportzustand und in einem Betriebszustand eine gezogene landwirtschaftliche Arbeitsmaschine 20. Als Zugmaschine für die Arbeitsmaschine 20 dient beispielsweise ein Ackerschlepper in Form eines Radtraktors oder eines Raupentraktors.

Die Arbeitsmaschine 20 umfasst eine Behältervorrichtung 25 zur Beherbergung des landwirtschaftlichen Guts in Form von Düngemittel und/oder Saatgut. Wie sich aus der Darstellung in Figur 6 ergibt, umfasst die Arbeitsmaschine 20 ferner eine Säeinrichtung 26 zur Aussaat des landwirtschaftlichen Guts in den Boden B und/oder zur Ausbringung von Düngemittel über die zumindest eine Werkzeugeinrichtung 100. Weitere Einheiten und Elemente der Säeinrichtung 26 sind nicht näher gekennzeichnet.

Durch die Tragvorrichtung 10 wie hierin offenbart kann ein optimierter Betrieb der Arbeitsmaschine 20 gewährleistet werden, wobei vor allem eine aufwendige Einstellung der Werkzeugeinrichtung 100 in Bezug auf eine definierte Arbeitstiefe und/oder in Bezug auf einen definierten Werkzeugdruck vermieden ist. Bei der vorliegenden Erfindung werden vor allem manuelle Schritte zur Einstellung der zumindest einen Werkzeugeinrichtung 100 obsolet.

Es versteht sich, dass ein Verstellen der Werkzeuglage der Werkzeugeinrichtung 100 zu dem Boden B und/oder zu dem Maschinenrahmen 21, und/oder ein Verstellen des Werkzeugdrucks der Werkzeugeinrichtung 100 auf den Boden B mittels zumindest einer Sensoreinheit hinreichend erfasst werden kann. Die erfasste Werkzeuglage und/oder der erfasste Werkzeugdruck kann durch die zumindest eine Sensoreinheit an eine Kontrolleinrichtung zur Regelung und/oder Steuerung der Aktuatoreinrichtung 22 übertragen werden, um die Aktuatoreinrichtung 22 entsprechen zu steuern und/oder entsprechend zu regeln, um die Werkzeugeinrichtung 100 definiert zu verstellen. Die zumindest eine Sensoreinheit sowie die Kontrolleinrichtung sind in den Figuren nicht dargestellt.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 10: Tragvorrichtung
- 20: landwirtschaftliche Arbeitsmaschine
- 21: Maschinenrahmen
- 22: Aktuatoreinrichtung
- 23: Zugvorrichtung
- 24: Anschlagelement
- 25: Behältervorrichtung
- 26: Säeinrichtung
- 100: Werkzeugeinrichtung
- 101: Werkzeugträger
- 102: Schwingenelement
- 103: Stellelement
- 104: Gelenkstelle
- 105: Gelenkstelle
- 106: Dämpfungselement
- 107: Werkzeugtragelement
- 110: erste Werkzeugeinheit/Schneidscheibeneinheit
- 120: zweite Werkzeugeinheit/Rolleneinheit
- 200: Verstelleinrichtung
- 210: Koppeleinheit
- 211: Koppelelement
- 212: Bolzen
- 213: Aufnahmeabschnitt
- 214: Aufnahmeabschnitt
- 215: Tragrahmen
- 216: Querträgerelement
- 217: Lagerungselement
- 220: Stelleinheit
- 221: Schwenkelement
- 222: Bolzen
- 223: Stützelement
- 224: Gelenkstelle
- 225: Gelenkstelle
- 226: Gelenkstelle
- 227: Gelenkstelle
- 228: Stellträgerelement
- 230: Vorspanneinheit
- 231: Spannhebel
- 232: Spannwerkzeug
- 300: Rückverfestigungseinrichtung
- 301: Tragelement
- A22: Schwenkachse der Aktuatoreinrichtung
- A210: Schwenkachse der Koppeleinheit
- A220: Schwenkachse der Stelleinheit
- B: Boden
- BR: Bewegungsrichtung
- Y: Seitenansicht

## Patentansprüche

1. Tragvorrichtung (10) zur Montage an einen Maschinenrahmen (21) einer landwirtschaftlichen Arbeitsmaschine (20),
• mit zumindest einer Werkzeugeinrichtung (100), welche zur Bearbeitung eines Bodens (B) und/oder zur Einbringung eines landwirtschaftlichen Guts in einen Boden (B) konfiguriert ist,
• mit zumindest einer Verstelleinrichtung (200), welche zur Verstellung der zumindest einen Werkzeugeinrichtung (100) konfiguriert ist,
wobei die zumindest eine Verstelleinrichtung (200) eine Koppeleinheit (210) umfasst, welche zur Lagerung an dem Maschinenrahmen (21) und zur Betätigung durch zumindest eine Aktuatoreinrichtung (22) konfiguriert ist, und
wobei die Verstelleinrichtung (200) eine Stelleinheit (220) umfasst, welche zur Einstellung einer Lage der zumindest einen Werkzeugeinrichtung (100) zu dem Boden (B) konfiguriert ist,
wobei die Koppeleinheit (210) und die Stelleinheit (220) miteinander beweglich gekoppelt sind und konfiguriert sind, eine Betätigung der Koppeleinheit (210) umzuwandeln und/oder in Abhängigkeit der umgewandelten Betätigung die zumindest eine Werkzeugeinrichtung (100) definiert zu verstellen.

2. Tragvorrichtung (10) nach Anspruch 1,
wobei die Stelleinheit (220) konfiguriert ist, eine definierte Werkzeuglage der zumindest einen Werkzeugeinrichtung (100) zu dem Boden (B) und/oder einen definierten Werkzeugdruck der zumindest einen Werkzeugeinrichtung (100) auf den Boden (B) jeweils gleichzeitig zu der Betätigung der Koppeleinheit (210) einzustellen.

3. Tragvorrichtung (10) nach Anspruch 1 oder 2,
mit einer Rückverfestigungseinrichtung (300), welche zum Andrücken des Bodens (B) konfiguriert ist;
wobei die Rückverfestigungseinrichtung (300) an der Koppeleinheit (210) befestigt ist, um bei Betätigung der Koppeleinheit (210) gleichzeitig zu der definierten Verstellung der zumindest einen Werkzeugeinrichtung (100) eine definierte Rückverfestigungseinrichtungslage der Rückverfestigungseinrichtung (300) zu dem Boden (B) einzustellen, und/oder
wobei die Stelleinheit (220) und die Rückverfestigungseinrichtung (300) jeweils auf einander gegenüberliegenden Seiten mit der Koppeleinheit (210) gekoppelt sind und konfiguriert sind, bei Betätigung der Koppeleinheit (210) die Rückverfestigungseinrichtung (300) in Richtung des Maschinenrahmens (21) und gleichzeitig die zumindest eine Werkzeugeinrichtung (100) in Richtung des Bodens (B) zu bewegen.

4. Tragvorrichtung (10) nach einem der vorhergehenden Ansprüche,
wobei die zumindest eine Verstelleinrichtung (200) und die zumindest eine Werkzeugeinrichtung (100) einen verstellbaren Koppelgetriebemechanismus (102, 103; 104, 105; 224, 225), vorzugsweise einen verstellbaren Vielgelenkmechanismus oder einen verstellbaren Parallelogramm-Mechanismus, umfassen oder ausbilden, welcher zumindest vier Gelenkstellen (104, 105; 224, 225) umfasst,
wobei zwei erste Gelenkstellen (104, 105), vorzugsweise an der zumindest einen Werkzeugeinrichtung (100), in einem Abstand zueinander angeordnet sind, welcher konstant ist; und/oder
wobei zwei zweite Gelenkstellen (224, 225), vorzugsweise an der zumindest einen Verstelleinrichtung (200), in einem Abstand zueinander angeordnet sind, welcher in Abhängigkeit der Betätigung der Koppeleinheit (210) variabel ist.

5. Tragvorrichtung (10) nach einem der vorhergehenden Ansprüche,
wobei die Koppeleinheit (210) zur schwenkbaren Lagerung, vorzugsweise mittels eines Bolzens (212), an dem Maschinenrahmen (21) konfiguriert ist, und/oder wobei die Stelleinheit (220) schwenkbar, vorzugsweise mittels eines Bolzens (222), an der Koppeleinheit (210) gelagert ist,
wobei vorzugsweise eine resultierende Schwenkachse (A210) der Koppeleinheit (210) und eine resultierende Schwenkachse (A220) der Stelleinheit (220) zueinander parallel und/oder voneinander konstant beabstandet angeordnet sind.

6. Tragvorrichtung (10) nach einem der vorhergehenden Ansprüche,
wobei die Stelleinheit (220) zumindest ein schwenkbar gelagertes Stützelement (223) umfasst, welches zur schwenkbaren Lagerung an dem Maschinenrahmen (21) konfiguriert ist, wobei vorzugsweise eine Länge des zumindest einen Stützelements (223) variabel einstellbar ist, um die Betätigung der Koppeleinheit (210) in einem definierten Verhältnis oder nach einer definierten Funktion geometrisch linear oder nichtlinear umzuwandeln.

7. Tragvorrichtung (10) nach einem der vorhergehenden Ansprüche,
wobei die zumindest eine Werkzeugeinrichtung (100) über zumindest ein Dämpfungselement (106) an der Koppeleinheit (210) gelagert ist,
wobei die zumindest eine Verstelleinrichtung (200) eine Vorspanneinheit (230) umfasst, welche zur Beaufschlagung des zumindest einen Dämpfungselements (106) mit einer einstellbaren Vorspannkraft konfiguriert ist.

8. Tragvorrichtung (10) nach einem der vorhergehenden Ansprüche,
wobei die zumindest eine Werkzeugeinrichtung (100) als eine separate, vorzugsweise autark vormontierbare, Werkzeugeinrichtung (100) konfiguriert ist, welche zur Bildung individuell konfigurierbarer Werkzeugeinheiten (110, 120) einen Werkzeugträger (101) umfasst,
wobei vorzugsweise der Werkzeugträger (101) über ein Stellelement (103) mit der Stelleinheit (220) gelenkig verbunden ist, und/oder
wobei vorzugsweise der Werkzeugträger (101) über ein Schwenkelement (102) und zumindest ein Dämpfungselement (106) an einem verdrehbaren Querträgerelement (216) der Koppeleinheit (210) gelagert ist.

9. Tragvorrichtung (10) nach einem der vorhergehenden Ansprüche,
wobei die zumindest eine Werkzeugeinrichtung (100) eine erste Werkzeugeinheit (110) und eine zweite Werkzeugeinheit (120) umfasst, wobei die erste Werkzeugeinheit (110) und/oder die zweite Werkzeugeinheit (120) an einem Werkzeugträger (101) der zumindest einen Werkzeugeinrichtung (100) voneinander beabstandet oder voneinander variabel verstellbar angeordnet sind,
wobei der Werkzeugträger (101) konfiguriert ist, dass bei Betätigung der Koppeleinheit (210) eine definierte Werkzeuglage der zweiten Werkzeugeinheit (120) zu dem Boden (B) eingestellt wird und/oder ein definierter Werkzeugdruck der ersten Werkzeugeinheit (110) auf den Boden (B) eingestellt wird.

10. Tragvorrichtung (10) nach einem der vorhergehenden Ansprüche,
wobei die zumindest eine Werkzeugeinrichtung (100) zumindest eine Werkzeugeinheit (110, 120) von Folgenden umfasst:
• eine Schneidscheibeneinheit (110), um in dem Boden (B) eine Furche zu bilden und/oder zu öffnen, wobei vorzugsweise die Schneidscheibeneinheit (110) zwei zueinander schräg angeordnete Schneidscheiben umfasst;
• eine Kufeneinheit, um in dem Boden (B) eine Furche zu bilden und/oder zu öffnen;
• eine Rolleneinheit (120), um den Boden (B), vorzugsweise eine Furche, zumindest teilweise anzudrücken und/oder zumindest teilweise zu schließen, und/oder um ein landwirtschaftliches Gut in dem Boden (B), vorzugsweise im Bereich einer Furche, zu fangen und/oder abzubremsen; und/oder
• eine Säeinheit mit zumindest einem Leitungselement, um ein landwirtschaftliches Gut in den Boden (B) einzubringen, vorzugsweise in einer Furche abzulegen.

11. Landwirtschaftliche Arbeitsmaschine (20), vorzugsweise zur Bearbeitung eines Bodens (B) und/oder zur Einbringung eines landwirtschaftlichen Guts in einen Boden (B) und/oder zum Transport eines landwirtschaftlichen Guts,
mit einem Maschinenrahmen (21), welcher an einer Frontseite eine Zug- und/oder Montagevorrichtung (23) aufweist, über welche die Arbeitsmaschine (20) in einem Transportzustand und in einem Betriebszustand in einer Bewegungsrichtung (BR) gezogen werden kann,
wobei an dem Maschinenrahmen (22), vorzugsweise an einer Heckseite des Maschinenrahmens (21), zumindest eine Tragvorrichtung (10) nach einem der vorhergehenden Ansprüche und zumindest eine Aktuatoreinrichtung (22) zur Betätigung einer Koppeleinheit (210) der zumindest einen Tragvorrichtung (10) montiert ist.

12. Arbeitsmaschine (20) nach Anspruch 11,
wobei eine Rückverfestigungseinrichtung (300) in dem Transportzustand als ein Fahrwerk der Arbeitsmaschine (20), vorzugsweise als ein Hauptfahrwerk der Arbeitsmaschine (20), dient, wobei vorzugsweise die Rückverfestigungseinrichtung (300) als Reifen-Packerwalze konfiguriert ist.

13. Arbeitsmaschine (20) nach Anspruch 11 oder 12,
wobei die zumindest eine Aktuatoreinrichtung (22) als Linearaktuator konfiguriert ist oder einen Linearaktuator umfasst, welcher elektrisch, elektromechanisch, pneumatisch oder hydraulisch betätigbar konfiguriert ist, und/oder
wobei die zumindest eine Aktuatoreinrichtung (22) konfiguriert ist, die Betätigung der Koppeleinheit (210) mittels zumindest eines Anschlagelements (24) einzustellen.

14. Verfahren zur Verstellung zumindest einer Werkzeugeinrichtung (100) einer landwirtschaftlichen Arbeitsmaschine (20), vorzugsweise nach einem der Ansprüche 11 bis 13, wobei die Koppeleinheit (210) durch die zumindest eine Aktuatoreinrichtung (22) betätigt wird und die Betätigung der Koppeleinheit (210) durch die Koppeleinheit (210) und durch die Stelleinheit (220) umgewandelt wird und in Abhängigkeit der umgewandelten Betätigung die zumindest eine Werkzeugeinrichtung (100) definiert verstellt wird.

15. Verfahren nach Anspruch 14,
wobei zumindest eine Sensoreinheit ein Verstellen einer Werkzeuglage der zumindest einen Werkzeugeinrichtung (100) zu dem Boden (B) und/oder eines Werkzeugdrucks der zumindest einen Werkzeugeinrichtung (100) auf den Boden (B) erfasst, vorzugsweise zumindest während die Koppeleinheit (210) betätigt wird, und/oder
wobei die zumindest eine Sensoreinheit auf die zumindest eine Werkzeugeinrichtung (100) wirkende Kräfte und/oder eine Arbeitstiefe der zumindest einen Werkzeugeinrichtung (100) erfasst, vorzugsweise zumindest während die Koppeleinheit (210) betätigt wird, und
die erfasste Werkzeuglage und/oder der erfasste Werkzeugdruck und/oder die erfassten Kräfte und/oder die erfasste Arbeitstiefe an eine Kontrolleinrichtung zur Regelung und/oder Steuerung der zumindest einen Aktuatoreinrichtung (22) übertragen wird.
